# EUROPÄISCHE PATENTSCHRIFT

(11) **EP 2 476 633 B1**
(45) Veröffentlichungstag und Bekanntmachung des Hinweises auf die Patenterteilung: **16.10.2013**
(21) Anmeldenummer: 10195723.1
(22) Anmeldetag: 17.12.2010
(51) Int. Cl.: B65D 85/804

(54) **Kapsel, System und Verfahren für die Zubereitung eines Getränks**
Capsule, system and method for preparing a drink
Capsule, système et procédé de préparation d'une boisson

(43) Veröffentlichungstag der Anmeldung: 18.07.2012
(73) Patentinhaber: Delica AG, 4127 Birsfelden (CH)
(72) Erfinder: Marschall, Christina, 8050 Zürich (CH); Popescu, Cristian Ionut, 4802 Strengelbach (CH)
(74) Vertreter: Hepp Wenger Ryffel AG

(56) Entgegenhaltungen:
- WO-A2-2010/041179
- DE-A1- 2 752 733

## Beschreibung

Die vorliegende Erfindung betrifft eine Kapsel gemäss dem Oberbegriff von Anspruch 1 sowie ein Verfahren zur Getränkeherstellung.

Derartige Kapseln, die insbesondere lediglich einmal verwendet werden und nach Gebrauch zur Getränkeherstellung entsorgt werden, sind heute weit verbreitet als Portionsverpackungen für die Zubereitung von beispielsweise Kaffee oder Tee. Der Verbraucher muss sich also beispielsweise nicht mehr um die Dosierung der richtigen Kaffeemenge kümmern und nach dem Extraktionsvorgang kann die Kapsel samt Inhalt entsorgt werden.

Aus der DE 27 52 733 ist eine Patrone bekannt, welche eine Substanz für die Herstellung eines Getränks mit einer Maschine enthält. Diese Patrone weist einen im Wesentlichen dichten Korpus mit einer spitzwinkligen Kegelstumpfform auf, wobei diese Patrone üblicherweise aus Aluminiumblech hergestellt wird.

Dieser bekannte Stand der Technik weist jedoch den Nachteil auf, dass die Verwendung von Aluminium als Material für eine Kapsel bzw. einen Kapselkörper zum einen kostspielig ist. Zudem ist die Verwendung von Aluminium für insbesondere lediglich einmal zu verwendende Kapseln nachteilig für die Umwelt, da der Energieverbrauch für die Aluminiumherstellung hoch ist und grosse Mengen Aluminiumabfall nach Gebrauch der Kapseln anfallen.

Aus der WO 2010/041179 A1 ist eine Kapsel zur Getränkeherstellung wie beispielsweise Kaffee bekannt. Die Kapsel kann beispielsweise gemahlenen Kaffee enthalten und weist eine Seitenwand, eine Oberseite und eine Unterseite auf. An der Oberseite weist die Kapsel einen Schwächungsbereich auf. Auf der Aussenseite der Oberseite sind Versteifungen vorgesehen.

Aus der EP 1 944 248 A1 ist eine Kunststoffkapsel bekannt, welche eine Substanz für die Herstellung eines Getränks mit einer Maschine enthält. In einem zentralen Bereich des Bodens der Kapsel ist eine Versteifungszone angeordnet, um zu verhindern, dass sich der Boden beim Aufbau der Reisspannung unmittelbar vor der Penetration unzulässig durchbiegt.

Dieser bekannte Stand der Technik weist jedoch den Nachteil auf, dass die Kapsel sich nicht zur Verwendung in häufig vorkommenden Maschinen zur Getränkeherstellung eignet, da deren Versteifung des Bodens häufig nicht ausreichend ist zur zuverlässigen Penetration des Bodens.

Es ist daher eine Aufgabe der vorliegenden Erfindung, die Nachteile des Bekannten zu vermeiden, insbesondere also eine Kapsel bereitzustellen, die in der Herstellung sowie auch in der Entsorgung weniger umweltbelastend und kostengünstig herstellbar ist und die eine zuverlässige Penetration des Bodens mittels häufig vorkommender Maschinen zur Getränkeherstellung erlaubt.

Diese Aufgabe wird durch eine Kapsel mit den Merkmalen im Anspruch 1 gelöst.

Die erfindungsgemässe Kapsel besteht aus einem Kapselkörper mit einer Seitenwand und mit einem einstückig mit der Seitenwand ausgebildetem Boden. Vorzugsweise ist der Kapselkörper rotationssymmetrisch ausgebildet. Die Kapsel umfasst einen den Kapselkörper abdeckenden Deckel zur Bildung einer geschlossenen Kammer, welche eine Substanz für die Zubereitung eines Getränks enthält. Wenigstens der Boden ist für die Durchleitung einer Flüssigkeit durch die Kammer mit einer ausserhalb der Kapsel angeordneten Einrichtung an einem Penetrationsbereich des Bodens penetrierbar. Der Boden weist einen Versteifungsbereich auf. Ein zentraler Bereich des Bodens ist als Penetrationsbereich ausgebildet, wobei der Versteifungsbereich um den Penetrationsbereich angeordnet ist. Der Boden ist vorzugsweise domförmig ausgebildet. Insbesondere ist der Versteifungsbereich rotationssymmetrisch um den Penetrationsbereich angeordnet. Der Versteifungsbereich ist als zumindest eine abschnittsweise Vertiefung im Wesentlichen in Umfangsrichtung im Boden ausgebildet. Mit anderen Worten weist der Versteifungsbereich eine oder mehrere abschnittsweise Vertiefungen im Wesentlichen in Umfangsrichtung im Boden auf.

Unter einer Vertiefung im Boden wird von hier ab und im Folgenden eine Vertiefung auf einer Aussenseite der Kapsel, d.h. der von der geschlossenen Kammer abgewandten Seite der Kapsel verstanden.

Unter einer abschnittsweisen Vertiefung im Boden im Wesentlichen in Umfangsrichtung wird von hier ab und im Folgenden verstanden, dass die Vertiefung in Umfangsrichtung eine Ausdehnung hat, die kleiner als der Umfang der Kapsel ist.

Unter der Formulierung, dass der Boden Vertiefungen aufweist, wird von hierab und im Folgenden verstanden, dass die Vertiefungen, die auch als Einbuchtungen bezeichnet werden, integraler Bestandteil des Bodens sind. Vertiefungen im Sinne der vorliegenden Anmeldung sind somit also nicht Vertiefungen zwischen externen Elementen am Boden, die beispielsweise an diesem aussen angebracht sind.

Bei der Verwendung von weicherem Material für die Kapsel als Aluminium besteht häufig das Problem, dass diese Kapseln mit üblichen, im Markt befindlichen Vorrichtungen zur Getränkeherstellung nicht zuverlässig durchstochen werden, da dieses weichere Material im Gegensatz zu Aluminium oft nachgiebiger und leichter deformierbar ist, ohne dass die Kapsel mit der entsprechenden Einrichtung der Vorrichtung zur Penetrierung penetriert wird. Dies ist jedoch notwendig ist für den Vorgang der Getränkeherstellung. Beispielsweise werden auch Kunststoffkapseln aus dem Stand der Technik, welche bereits einen versteiften Boden aufweisen, oft nicht zuverlässig penetriert.

Die erfindungsgemässe Kapsel weist nun den Vorteil auf, dass die Kapsel durch den Versteifungsbereich mit abschnittsweisen Vertiefungen im Boden zuverlässig durch handelsübliche Vorrichtungen zur Getränkeherstellung penetrierbar ist, so dass die Getränkeherstellung ermöglicht wird. Zudem ist die Kapsel auch kostengünstig herstellbar, da der Versteifungsbereich als integraler Bestandteil der Kapsel ausgebildet ist und die Kapsel somit beispielsweise mittels eines Tiefziehverfahrens herstellbar ist.

Abschnittsweise Vertiefungen haben insbesondere gegenüber umlaufenden Vertiefungen oder auch umlaufenden Rippen am oder im Boden den Vorteil, dass diese einen besseren Versteifungseffekt bewirken. Umlaufende Vertiefungen oder auch umlaufende Rippen im Boden führen also oft zu einer nicht ausreichenden Versteifung.

Unter einem Penetrationsbereich wird im Sinne der vorliegenden Anmeldung ein insbesondere stetiger Bereich des Bodens verstanden, der von der Einrichtung zur Penetration penetriert wird.

Unter einem Versteifungsbereich wird im Sinne der vorliegenden Anmeldung ein Bereich des Bodens verstanden, in dem die Vertiefungen zur Versteifung angeordnet sind.

Unter einem zentralen Bereich des Bodens wird von hieran und im Folgenden verstanden, dass dieser Bereich eine insbesondere stetige Fläche darstellt und zumindest den geometrischen Mittelpunkt des Kapselbodens umfasst.

Unter dem Begriff rotationssymmetrisch wird hier und im Folgenden eine Symmetrie bezüglich Rotation um die Längsachse der Kapsel um einen diskreten Winkel oder aber auch um beliebige Winkel verstanden.

Diese Anordnung des Penetrationsbereichs in einem zentralen Bereich des Bodens mit einem darum angeordneten Versteifungsbereich hat den Vorteil, dass dadurch eine sehr gute Versteifung des Penetrationsbereichs erreichbar ist, so dass die Kapsel zuverlässig zu penetrieren ist mit der Einrichtung zur Penetrierung der Vorrichtung zur Getränkeherstellung.

Bevorzugt weist die Vertiefung wenigstens zwei zueinander geneigte Wandabschnitte auf.

Besonders bevorzugt ist die zumindest eine abschnittsweise Vertiefung stufenförmig ausgebildet und/oder in einer entlang der Längsachse des Kapselkörpers verlaufenden Schnittebene, d.h. durch die Vertiefung, L-förmig ausgebildet. Im Fall der L-förmigen Ausbildung der Vertiefung liegt insbesondere ein Arm der L-Form im Wesentlichen parallel zur Längsachse des Kapselkörpers. Alternativ schliesst dieser Arm der L-Form mit der Längsachse einen Winkel im Bereich von +/- 20°, bevorzugt von +/- 10° und ganz besonders bevorzugt von +/- 5° ein.

Diese Ausgestaltung der zumindest einen Vertiefung der Kapsel weist den Vorteil auf, dass durch die stufenförmige bzw. L-förmige Ausbildung der abschnittsweisen Vertiefung eine besonders gute Versteifung des Kapselbodens erzielbar ist. Dadurch wird eine zuverlässige Penetration des Bodens mittels der Einrichtung zur Penetrierung der Vorrichtung zur Getränkeherstellung erreicht.

Besonders bevorzugt weist die abschnittsweise Vertiefung zumindest einen Flächenabschnitt parallel zu einer entlang der Längsachse des Kapselkörpers verlaufenden Schnittebene durch die Vertiefung auf oder schliesst mit dieser Schnittebene einen Winkel im Bereich von +/- 45°, bevorzugt von +/- 30° und ganz besonders bevorzugt von +/- 15° ein. Bevorzugt wird ein Winkel im Bereich von +/- 10° und besonders bevorzugt von +/- 5°eingeschlossen.

Diese Ausgestaltung der zumindest einen Vertiefung der Kapsel weist den Vorteil auf, dass durch die Ausbildung der abschnittsweisen Vertiefung mittels der Orientierung des Flächenabschnitts eine weiter verbesserte Versteifung ermöglicht wird.

Insbesondere verläuft die Schnittebene entlang der Längsachse des Kapselkörpers durch den Mittelpunkt des dem zentralen Bereich des Bodens zugewandten Umfangsabschnitts der Vertiefung.

Ganz besonders bevorzugt weist der Boden zumindest zwei Vertiefung und bevorzugt drei bis zehn Vertiefungen auf.

Diese Ausgestaltung hat den Vorteil, dass durch die wählbare Anzahl der Vertiefungen im Boden zur Versteifung eine Anpassung an die jeweiligen Anforderungen bezüglich Steifheit des Bodens möglich ist. Die Anzahl Vertiefungen kann beispielsweise in Abhängigkeit vom gewählten Material des Kapselkörpers oder auch in Abhängigkeit von der Vorrichtung zur Getränkeherstellung, in der die Kapsel verwendet werden soll, erfolgen.

Alternativ bevorzugt ist der Boden zwischen den Vertiefungen als insbesondere dreieckförmiger Steg ausgebildet.

Dies hat den Vorteil der weiteren Verbesserung der Versteifung des Bodens zur Erreichung einer noch zuverlässigeren Penetration des Bodens mittels der Einrichtung zur Penetrierung der Vorrichtung zur Getränkeherstellung.

Alternativ besonders bevorzugt weist die Kapselwand zumindest einen innenseitigen Vorsprung als Stapelschulter auf. Bevorzugt weist die Kapselwand zwei und besonders bevorzugt zumindest drei innenseitige Vorsprünge auf. Zudem weist die Kapselwand insbesondere komplementäre aussenseitige Vertiefungen zu den innenseitigen Vorsprüngen auf.

Unter der Formulierung, dass die Kapselwand komplementäre aussenseitige Vertiefungen zu den innenseitigen Vorsprüngen aufweist, wird hier und im Folgenden verstanden, dass sich die aussenseitigen Vertiefungen an den gleichen Positionen wie die innenseitigen Vorsprünge der Kapselwand befinden.

Unter einem innenseitigen Vorsprung wird im Sinne der vorliegenden Anmeldung verstanden, dass die Kammer zur Aufnahme einer Substanz in der Kapselwand Vorsprünge aufweist.

Diese Ausgestaltung der Kapselwand mit innenseitigen Vorsprüngen hat den Vorteil, dass die noch nicht gefüllten Kapselkörper stapelbar sind und aufgrund der innenseitigen Vorsprünge einfach wieder trennbar sind, da ein Verkeilen der gestapelten Kapseln verhindert wird. Dies hat den Vorteil, dass beispielsweise in einer Produktionslinie zur Abfüllung von Kaffee die Kapselkörper zuverlässig vereinzelt werden können. Beispielsweise können die Kapselkörper mittels eines Greifarms von einem Stapel automatisiert entnommen werden, so dass jeweils zuverlässig nur eine Kapsel in die Abfüllvorrichtung eingeführt wird.

Zusätzlich bevorzugt sind die innenseitigen Vorsprünge umfangmässig voneinander beabstandet.

Unter der Formulierung, dass die innenseitigen Vorsprünge umfangmässig voneinander beabstandet sind, wird von hieran und im Folgenden verstanden, dass die innenseitigen Vorsprünge bei einer Projektion entlang der Kapselwand parallel zur Längsachse der Kapsel nicht vollständig überlappen.

Diese Anordnung der innenseitigen Vorsprünge hat den Vorteil, dass die Kapselkörper einfach und zuverlässig voneinander trennbar sind, wenn diese aufeinander gestapelt sind.

Die aussenseitigen Vertiefungen weisen zudem den Vorteil auf, dass der Kapselkörper aussenseitig gut greifbar ist durch entsprechende Einrichtungen der Abfüllvorrichtung.

Bevorzugt besteht der Kapselkörper aus Kunststoff und besonders bevorzugt aus zumindest einem Biopolymer.

Dies hat den Vorteil, dass der Kapselkörper in der Herstellung energetisch günstiger ist gegenüber dem Stand der Technik, insbesondere gegenüber Kapseln aus Aluminium. Zudem ist auch der nach Gebrauch anfallende Abfall leichter zu entsorgen als bei handelsüblichen Aluminiumkapseln.

Als Kunststoff wird im Sinne der vorliegenden Anmeldung ein organisches Polymer verstanden, das im Wesentlichen aus organischen Molekülen hergestellt wird oder auch eine Biopolymer und beliebige Kombinationen aus diesen Materialien.

Unter einem Biopolymer wird im Sinne der vorliegenden Anmeldung ein natürlich vorkommendes Polymer verstanden und insbesondere ein biologisch abbaubares Biopolymer.

Zusätzlich besonders bevorzugt steht der Kapselkörper zumindest aus zwei Polymerschichten. Insbesondere wird der Kapselkörper mittels eines Tiefziehverfahrens hergestellt, wobei besonders bevorzugt eine äussere Schicht des Kapselkörpers aus Polyethylen besteht.

Die Herstellung des Kapselkörpers aus zumindest zwei Polymerschichten hat den Vorteil, dass diese entsprechend dem Verwendungszweck beispielsweise in Abhängigkeit von der zu verwendenden Vorrichtung zur Getränkeherstellung gewählt werden können. Durch den Schichtaufbau des Kapselkörpers kann zudem gewählt werden, welche Eigenschaften beispielsweise bezüglich Weichheit die äussere oder auch innere Schicht aufweisen soll.

Insbesondere besteht eine der Schichten aus Polyethylen und die andere aus Polypropylen. Alternativ kann auch eine der Schichten aus Ethylen-Vinylalkohol bestehen.

Insbesondere vorteilhaft besteht der Kapselkörper aus zumindest drei Schichten, besonders vorteilhaft zumindest vier Schichten und ganz besonders vorteilhaft aus zumindest fünf Schichten.

Insbesondere bestehen diese Schichten jeweils aus einem der folgenden Materialien oder einer beliebigen Kombination daraus: Polypropylen, Polyethylen, Ethylen-Vinylalkohol.

Die Herstellung des Kapselkörpers mittels eines Tiefziehverfahrens weist den Vorteil auf, dass die Herstellung des Kapselkörpers mittels dieses Verfahrens kostengünstig ist und einen hohen Durchsatz durch die Vorrichtung zum Tiefziehen erlaubt.

Zusätzlich ganz besonders bevorzugt weist der Kapselkörper einen seitlich über die Kapselwand abstehenden Flansch auf zur Befestigung des Deckels.

Dies hat den Vorteil, dass der Deckel zuverlässig an der Kapselwand befestigt werden kann, da der Kapselkörper im Bereich des Flansches eine ausreichend grosse Fläche zur Befestigung des Deckels aufweist.

Zudem hat der Flansch den Vorteil, dass die Positionierung der Kapsel in der Vorrichtung zur Getränkeherstellung verbessert wird.

Zudem bevorzugt ist der Deckel aus einer Aluminiumfolie, einer perforierten Folie oder Filterpapier gebildet. Alternativ kann der Deckel auch aus einer beliebigen Kombination von Aluminiumfolie, perforierter Folie und Filterpapier gebildet sein.

Die Verwendung von Aluminiumfolie als Deckel hat den Vorteil, dass damit die Kapsel im Wesentlichen luftdicht verschliessbar ist und somit die Kapsel aromadicht ist. Somit ist die Verpackung der Kapsel für den Verkauf in einer zusätzlichen, luftdichten Hülle nicht notwendig, was kostengünstig ist und die Handhabung der Kapsel zur Getränkeherstellung vereinfacht.

Die Verwendung einer perforierten Folie und/oder Filterpapier als Deckel hat den Vorteil, dass in der Vorrichtung zur Getränkeherstellung keine Einrichtungen zum Perforieren oder Aufreissen des Deckels benötigt werden zur Abführung des Getränks durch den Deckel. Zudem kann die Perforation der Folie oder auch die Filteröffnungen des Filterpapiers so gewählt werden, dass ein optimaler Fluss der Flüssigkeit durch die Kapsel erzielt wird zur Erzielung einer hohen Qualität des hergestellten Getränks.

Hierdurch kann insbesondere erreicht werden, dass ein möglichst grosser Anteil der extrahierbaren Substanz auch extrahiert wird.

Ein weiterer Aspekt der vorliegenden Erfindung betrifft einen Kapselkörper für eine Kapsel wie oben beschrieben.

Da der Kapselkörper für die oben beschriebene Kapsel verwendet wird, weist dieser alle oben beschriebenen Vorteile auf.

Ein weiterer Aspekt der vorliegenden Erfindung ist gerichtet auf eine Portionsverpackung umfassend eine mit einer Substanz gefüllte Kapsel wie oben beschrieben. Insbesondere enthält diese Kapsel Kaffee. Die Kapsel ist von einer im Wesentlichen luftdichten Hülle umschlossen.

Die Kapsel in der Portionsverpackung entspricht der oben beschriebenen Kapsel und weist deshalb deren Vorteile auf.

Diese Portionsverpackung weist den Vorteil auf, dass die Kapsel aromadicht verschlossen werden kann, was insbesondere bei Kaffee vorteilhaft ist. Diese Hülle wird insbesondere vorteilhaft verwendet bei Verwendung einer perforierten Folie oder Filterpapier als Deckel wie oben beschrieben, um die Kapsel für die Lagerung und den Transport aromadicht, d.h. im Wesentlichen luftdicht, zu verschliessen. Auch bei Verwendung einer Aluminiumfolie kann die Verwendung der Hülle zum im Wesentlichen luftdichten Verschliessen vorteilhaft sein, falls die Aluminiumfolie Beschädigungen aufweist oder nicht im Wesentlichen luftdicht mit dem Kapselkörper verbunden ist.

Ein zusätzlicher Aspekt der vorliegenden Erfindung ist gerichtet auf ein System umfassend einer mit einer Substanz gefüllten Kapsel wie oben beschrieben oder mit einer Portionsverpackung wie oben beschrieben. Weiterhin umfasst das System eine Getränkeherstellungsvorrichtung, wobei die Getränkeherstellungsvorrichtung einen Kapselhalter aufweist zur Aufnahme der Kapsel sowie eine Einrichtung zur Penetrierung eines Bodens der Kapsel. Weiterhin weist die Getränkeherstellungsvorrichtung eine Einrichtung zur Zuführung einer Flüssigkeit in die Kapsel zur Extrahierung der Substanz auf zur Herstellung eines Getränks. Das Getränk ist durch einen Deckel der Kapsel abführbar.

Dieses System umfasst eine Kapsel wie oben beschrieben und weist deshalb alle oben beschriebenen Vorteile auf.

Die Getränkeherstellungsvorrichtung weist zudem insbesondere eine Einrichtung zur Abführung des Getränks auf, beispielsweise in einen Trinkbehälter.

Im Falle der Verwendung einer Aluminiumfolie als Deckel, die nicht perforiert ist, weist die Getränkeherstellungsvorrichtung zusätzlich eine Aufreissvorrichtung auf, so dass das Getränk durch den Deckel abführbar ist.

Im Falle der Verwendung einer Kapsel mit perforierter Folie oder Filterpapier als Deckel ist keine Aufreisseinrichtung in der Getränkeherstellungsvorrichtung notwendig. Es ist jedoch auch denkbar, eine Getränkeherstellungsvorrichtung mit einer Aufreisseinrichtung in Verbindung mit einer Kapsel mit perforierter Folie oder Filterpapier als Deckel zu verwenden.

Ein zusätzlicher Aspekt der vorliegenden Erfindung ist gerichtet auf die Verwendung einer mit Kaffee gefüllten Kapsel wie oben beschrieben oder einer Portionsverpackung wie oben beschrieben zur Herstellung eines Kaffeegetränks.

Diese Verwendung weist alle beschriebenen Vorteile der oben beschriebenen Kapsel oder der Portionsverpackung auf.

Ein weiterer Aspekt der vorliegenden Erfindung ist gerichtet auf ein Verfahren zur Getränkeherstellung. In einem ersten Schritt des Verfahrens erfolgt das Einsetzen einer mit einer Substanz befüllten Kapsel wie oben beschrieben in einen Kapselhalter einer Getränkeherstellungsvorrichtung. Anschliessend erfolgt ein Penetrieren eines Bodens der Kapsel mittels einer Einrichtung zur Penetrierung der Getränkeherstellungsvorrichtung. Anschliessend wird eine Flüssigkeit in die Kapsel zugeführt unter einem Druck im Bereich von 1 bar bis 20 bar. Die Flüssigkeit ist insbesondere erhitzt, wobei es sich insbesondere um Wasser handelt. Mittels der zugeführten Flüssigkeit erfolgt ein Extrahieren eines Getränks aus der Substanz in der Kapsel. Anschliessend wird das Getränk durch einen Deckel der Kapsel abgeführt. Der Deckel weist Öffnungen zur Abführung des Getränks auf. Alternativ wird durch die zugeführte Flüssigkeit unter Zusammenwirkung mit einer Aufreisseinrichtung der Getränkeherstellungsvorrichtung der Deckel aufgerissen zur Abführung des Getränks.

In dem Verfahren zur Getränkeherstellung wird eine Kapsel wie oben beschrieben verwendet. Dieses Verfahren weist somit alle Vorteile der oben beschriebenen Kapsel auf.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: Seitenansicht einer erfindungsgemässen Kapsel;
- Figur 2:: Draufsicht auf die Kapsel gemäss Figur 1;
- Figur 3:: Querschnitt der Kapsel gemäss Figur 1 aus anderem Blickwinkel, gefüllt mit einer Substanz;
- Figur 4:: perspektivische Ansicht von oben eines Kapselkörpers der Kapsel gemäss Figur 1;
- Figur 5:: schematische Darstellung eines erfindungsgemässen Systems bestehend aus Kapsel und Getränkeherstellungsvorrichtung in einer ersten Position;
- Figur 6:: System gemäss Figur 5 bestehend aus Kapsel und Getränkeherstellungsvorrichtung in einer zweiten Position;
- Figur 7:: schematische Darstellung einer erfindungsgemässen Portionsverpackung umfassend eine mit einer Substanz gefüllten Kapsel mit einer Hülle;
- Figur 8:: teilgeschnittene Seitenansicht einer alternativen erfindungsgemässen Kapsel;
- Figur 9:: teilgeschnittene Seitenansicht einer weiteren alternativen erfindungsgemässen Kapsel.

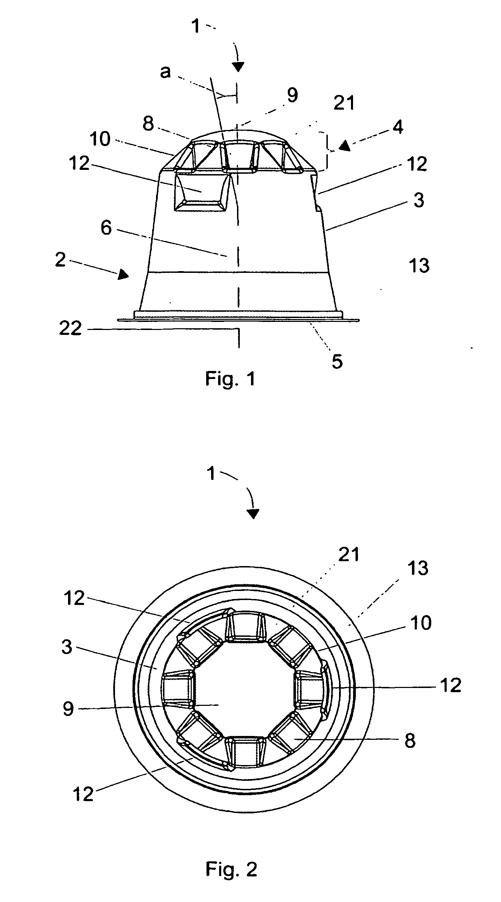

In Figur 1 ist in einer Seitenansicht eine erfindungsgemässe Kapsel 1 senkrecht zur Längsachse 22 der Kapsel 1 dargestellt.

Die Kapsel 1 weist einen Kapselkörper 2 auf mit einer Seitenwand 3 und mit einem einstückig mit diesem ausgebildeten Boden 4. Der Boden 4 ist domförmig ausgebildet. Weiterhin weist die Kapsel 1 einen Deckel 5 auf, der aus einer Aluminiumfolie besteht, welche nicht perforiert ist. Der Deckel 5 ist an einem Flansch 13 angebracht.

Der Kapselkörper 2 sowie der Deckel 5 bilden eine geschlossene Kammer 6, in welche eine hier nicht dargestellte Substanz eingefüllt ist, bei der es sich hier um Kaffee handelt.

Der Kapselkörper 2 weist in dem Boden 4 des Kapselkörpers 2 einen Penetrationsbereich 9 auf sowie einen Versteifungsbereich 10. Der Versteifungsbereich 10 ist um den Penetrationsbereich 9 angeordnet. In dem Versteifungsbereich 10 weist der Boden 4 abschnittsweise Vertiefungen 8 auf. Zwischen diesen abschnittsweisen Vertiefungen 8 ist der Boden 4 im Versteifungsbereich 10 in Form dreieckförmiger Stege 21 ausgebildet zur besseren Versteifung des Bodens 4 der Kapsel 1. Die abschnittsweisen Vertiefungen 8 im Versteifungsbereich 10 sind stufenförmig ausgebildet.

In der Seitenwand 3 der Kapsel 1 sind hier zwei von drei voneinander umfangmässig beabstandeten aussenseitigen Vertiefungen 12 sichtbar, die komplementär zu in der geschlossenen Kammer 6 angeordneten innenseitigen Vorsprüngen (hier nicht sichtbar) sind.

Ein Flächenabschnitt der Vertiefung 8 schliesst mit der Schnittebene parallel zur Längsachse 22 einen Winkel a von 10° ein.

In Figur 2 ist eine Draufsicht auf die erfindungsgemässe Kapsel gemäss Figur 1 dargestellt parallel zur Längsachse der Kapsel 1. Gleiche Referenzzeichen bezeichnen gleiche Merkmale in allen Figuren und werden deshalb nur bei Bedarf erneut erläutert.

Bezüglich der Vertiefungen 8 ist der Versteifungsbereich 10 rotationssymmetrisch bezüglich diskreter Winkel um den Penetrationsbereich 9 angeordnet, d.h. bezüglich Drehungen um im Wesentlichen jeweils 1/8 einer vollen Rotation um 360°.

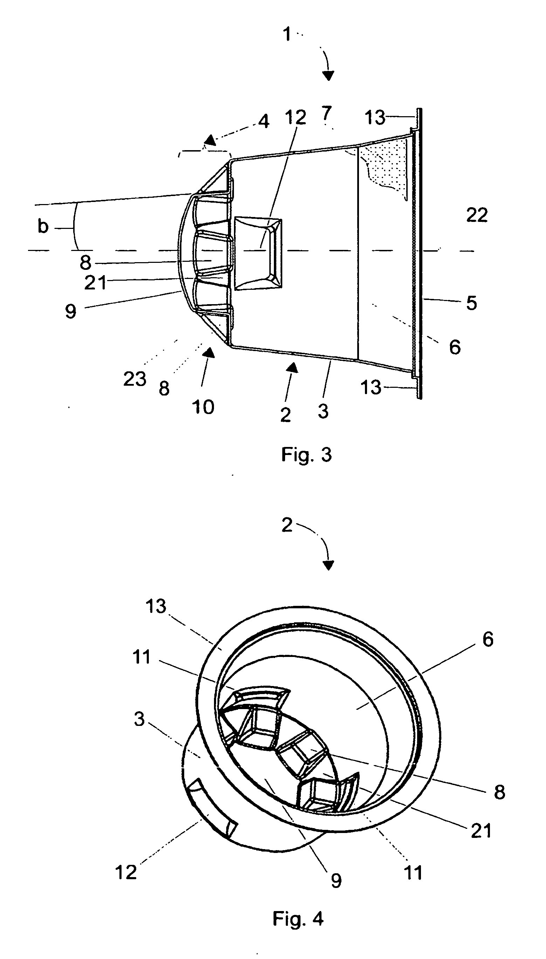

In Figur 3 ist eine erfindungsgemässe Kapsel 1 in einem Querschnitt gemäss Figur 1 dargestellt, beinhaltend eine Substanz 7.

Die Kapsel 1 umfasst einen Kapselkörper 2 mit einer Seitenwand 3. An einem Flansch 13 ist ein perforierter Deckel 5 angebracht zur Bildung der geschlossenen Kammer 6, in der die Substanz 7 aufgenommen ist.

Die abschnittsweisen Vertiefungen 8 sind stufenförmig ausgebildet und weisen in einer Schnittebene parallel zur Längsachse 22 des Kapselkörpers eine L-Form auf. Ein Arm 23 der L-Form der abschnittsweisen Vertiefung 8 schliesst mit der Längsachse 22 einen Winkel b von 5° ein.

In Figur 4 ist in perspektivischer Darstellung von oben ein Kapselkörper 2 gemäss Figur 1 dargestellt. Deutlich sichtbar sind hier die nach innen gestülpten, abschnittsweisen Vertiefungen 8.

Der Kapselkörper 2 weist einen seitlich über eine Kapselwand 3 abstehenden Flansch 13 auf, an dem ein Deckel befestigbar ist. Die innenseitigen Vorsprünge 11, d.h. die Stapelschultern, dienen der Vereinzelbarkeit der Kapseln, wenn diese aufeinander gestapelt sind und zur Abfüllung beispielsweise mit Kaffee in eine entsprechende Abfüllvorrichtung gefördert werden sollen.

Der Kapselkörper 2 weist eine Kammer 6 auf, die mit einem hier nicht gezeigten Deckel verschliessbar ist.

Ein Boden des Kapselkörpers 2 weist einen Penetrationsbereich 9 sowie um diesen herum angeordnete, abschnittsweise Vertiefungen 8 auf. Die abschnittsweisen Vertiefungen 8 im Boden sind als Erhöhungen in die Kammer 6 ausgebildet. Zwischen den abschnittsweisen Vertiefungen 8 werden dreieckförmige Stege 21 gebildet.

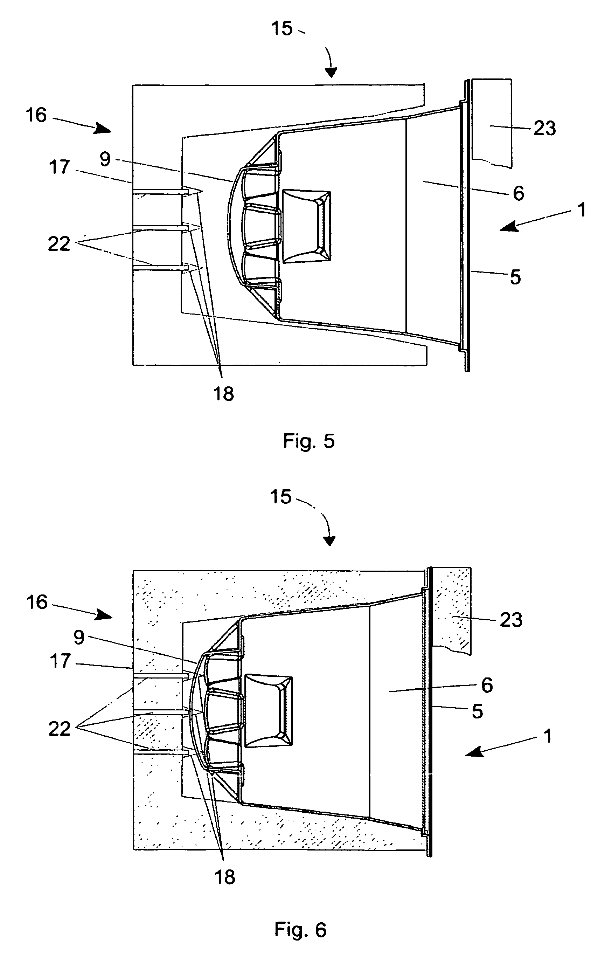

In Figur 5 ist schematisch ein System 15 umfassend eine Getränkeherstellungsvorrichtung 16 mit einer Siebplatte 23 und eine erfindungsgemässe Kapsel 1 gemäss Figur 1 dargestellt.

Die Kapsel 1 ist mit einer nicht gezeigten Substanz, bei der es sich hier um Kaffee handelt, gefüllt, und teilweise in einen Kapselhalter 17 zur Aufnahme der Kapsel 1 eingeführt. Der Kapselhalter 17 weist drei Einrichtungen 18 zur Penetrierung eines Penetrationsbereichs 9 der Kapsel 1 auf. Durch diese Einrichtungen zur Penetrierung kann erhitztes Wasser durch die Öffnungen 22 in die Kapsel 1 gefördert werden zur Extraktion eines Getränks, welches anschliessend durch einen Deckel 5 der Kapsel 1, der hier als Filter ausgebildet ist, durch die Siebplatte 23 der Getränkeherstellungsvorrichtung 16 abgeführt wird. In der gezeigten Offenstellung sind die Siebplatte 23 und der Deckel 5 voneinander beabstandet.

In Figur 6 ist das System 15 umfassend die Kapsel 1 in einer zweiten Position, d.h. einer Geschlossenstellung, dargestellt. In der hier gezeigten Darstellung wurde der Penetrationsbereich 9 der Kapsel 1 durch die Einrichtung 18 zur Penetrierung bereits penetriert. Durch die Einrichtung 18 zur Penetrierung ist, wie bereits zu Figur 5 erläutert, erhitztes Wasser unter einem Druck von hier 15 bar in die Kapsel förderbar. Hierdurch wird die kaffeehaltige Substanz 7 extrahiert und durch einen Deckel 5, der hier als perforierte Folie ausgebildet ist, aus der Kapsel durch die Siebplatte 23 der Getränkeherstellungsvorrichtung 16 gefördert in ein nicht dargestelltes Trinkgefäss.

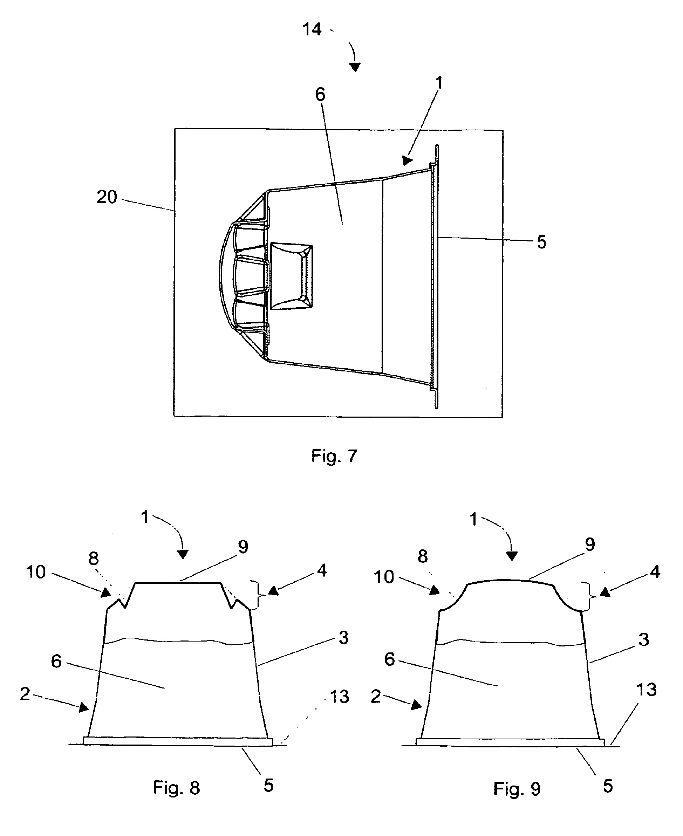

In Figur 7 ist eine Portionsverpackung 14 dargestellt umfassend eine erfindungsgemässe Kapsel 1 gemäss Figur 1 gefüllt mit einer kaffeehaltigen Substanz. Die Kapsel 1 weist einen Deckel 5 auf, der als perforierte Folie ausgebildet ist und nicht aromadicht ist. Für den Transport und/oder die Lagerung der Kapsel 1 ist diese durch eine Hülle 20 verpackt und im Wesentlichen luftdicht verschlossen, um eine aromadichte Verpackung zu erreichen.

In Figur 8 ist eine teilgeschnittene Seitenansicht einer alternativen erfindungsgemässen Kapsel 1 dargestellt. Die vorliegende Kapsel 1 weist lediglich zwei Vertiefungen 8 auf. Im Unterschied zur Kapsel 1 gemäss Figur 1 sind die abschnittsweisen Vertiefungen 8 im Boden 4 hier im Querschnitt als zwei zueinander geneigte Wandabschnitte mit spitzem Winkel zueinander ausgebildet. Zudem ist der Penetrationsbereich 9 als flacher Bereich ausgebildet.

In Figur 9 ist eine teilgeschnittene Seitenansicht einer weiteren alternativen erfindungsgemässen Kapsel 1 dargestellt. Der Boden 4 weist einen Penetrationsbereich 9 und einen Versteifungsbereich 10 auf, der zwei abschnittsweise Vertiefungen 8 mit im Querschnitt bogenförmiger Ausbildung aufweist.

## Patentansprüche

1. Kapsel (1) bestehend aus einem vorzugsweise rotationssymmetrisch ausgebildeten Kapselkörper (2) mit einer Seitenwand (3) und mit einem einstückig mit dieser ausgebildeten Boden (4), sowie mit einem den Kapselkörper (2) abdeckenden Deckel (5) zur Bildung einer geschlossenen Kammer (6), welche eine Substanz (7) für die Zubereitung eines Getränks enthält, wobei wenigstens der Boden (4) für die Durchleitung einer Flüssigkeit durch die Kammer mit einer ausserhalb der Kapsel (1) angeordneten Einrichtung (18) an einem Penetrationsbereich (9) des Bodens (4) penetrierbar ist, wobei der Boden (4) einen Versteifungsbereich (10) aufweist und wobei ein zentraler Bereich des vorzugsweise domförmig ausgebildeten Bodens (4) als Penetrationsbereich (9) ausgebildet ist, **dadurch gekennzeichnet, dass** der Versteifungsbereich (10) insbesondere rotationssymmetrisch um den Penetrationsbereich (9) angeordnet ist, wobei der Versteifungsbereich (10) als zumindest eine abschnittsweise Vertiefung (8) im Wesentlichen in Umfangsrichtung im Boden (4) ausgebildet ist.

2. Kapsel (1) nach Anspruch 1, **dadurch gekennzeichnet, dass** die Vertiefung (8) wenigstens zwei zueinander geneigte Wandabschnitte aufweist.

3. Kapsel (1) nach Anspruch 1 oder 2, **dadurch gekennzeichnet, dass** die Vertiefung (8) stufenförmig ausgebildet ist und / oder in einer entlang der Längsachse (22) des Kapselkörpers (2) verlaufenden Schnittebene L-förmig ausgebildet ist, wobei insbesondere ein Arm (23) der L-Form im Wesentlichen parallel zur Längsachse des Kapselkörpers (2) liegt oder mit der Längsachse einen Winkel (b) im Bereich von ± 20°, bevorzugt von ± 10° und ganz besonders bevorzugt von ± 5° einschliesst.

4. Kapsel (1) nach einem der Ansprüche 1 bis 3, **dadurch gekennzeichnet, dass** die Vertiefung (8) zumindest einen Flächenabschnitt parallel zu einer entlang der Längsachse (22) des Kapselkörpers (2) verlaufenden Schnittebene durch die Vertiefung (8) aufweist oder dass der Flächenabschnitt mit dieser Schnittebene einen Winkel (a) im Bereich von +/-45°, bevorzugt von +/- 30° und ganz besonders bevorzugt von +/- 15° einschliesst.

5. Kapsel (1) nach einem der Ansprüche 1 bis 4, **dadurch gekennzeichnet, dass** der Boden (4) zumindest zwei und bevorzugt drei bis zehn Vertiefungen (8) aufweist.

6. Kapsel (1) nach Anspruch 5, **dadurch gekennzeichnet, dass** der Boden (4) zwischen den Vertiefungen (8) als insbesondere dreieckförmiger Steg (21) ausgebildet ist.

7. Kapsel (1) nach einem der Ansprüche 1 bis 6, **dadurch gekennzeichnet, dass** die Kapselwand (3) zumindest einen innenseitigen Vorsprung (11), bevorzugt zwei und besonders bevorzugt zumindest drei innenseitige Vorsprünge (11) als Stapelschulter aufweist, wobei insbesondere die Kapselwand (3) komplementäre aussenseitige Vertiefungen (12) zu den innenseitigen Vorsprüngen (11) aufweist.

8. Kapsel (1) nach Anspruch 7, **dadurch gekennzeichnet, dass** die innenseitigen Vorsprünge (11) umfangmässig voneinander beabstandet sind.

9. Kapsel (1) nach einem der Ansprüche 1 bis 8, **dadurch gekennzeichnet, dass** der Kapselkörper (2) aus Kunststoff besteht, bevorzugt aus zumindest einem Biopolymer.

10. Kapsel (1) nach einem der Ansprüche 1 bis 9, **dadurch gekennzeichnet, dass** der Kapselkörper (2) zumindest aus zwei Polymerschichten besteht und insbesondere mittels eines Tiefziehverfahrens hergestellt ist, wobei besonders bevorzugt eine äussere Schicht des Kapselkörper (2) aus Polyethylen besteht.

11. Kapsel (1) nach einem der Ansprüche 1 bis 10, **dadurch gekennzeichnet, dass** der Deckel (5) aus einer Aluminiumfolie, einer perforierten Folie oder Filterpapier oder beliebigen Kombinationen daraus gebildet ist.

12. Kapselkörper (2) für eine Kapsel (1) gemäss einem der Ansprüche 1 bis 11.

13. Portionsverpackung (14) umfassend eine mit einer Substanz (7), insbesondere mit Kaffee, gefüllte Kapsel (1) gemäss einem der Ansprüche 1 bis 11, **dadurch gekennzeichnet, dass** die Kapsel (1) von einer Hülle (20) im Wesentlichen luftdicht umschlossen ist.

14. System (15) umfassend eine mit einer Substanz (7) gefüllte Kapsel (1) gemäss einem der Ansprüche 1 bis 11 oder eine Portionsverpackung (14) nach Anspruch 13 und eine Getränkeherstellungsvorrichtung (16), wobei die Getränkeherstellungsvorrichtung (16) einen Kapselhalter (17) aufweist zur Aufnahme der Kapsel (1), sowie eine Einrichtung (18) zur Penetrierung eines Bodens (4) der Kapsel (1) und zur Zuführung einer Flüssigkeit in die Kapsel (1) zur Extrahierung der Substanz (7) zur Herstellung eines Getränks, wobei das Getränk durch einen Deckel (5) der Kapsel (1) abführbar ist.

15. Verwendung einer mit Kaffee gefüllten Kapsel (1) gemäss einem der Ansprüche 1 bis 11 oder einer Portionsverpackung (14) nach Anspruch 13 zur Herstellung eines Kaffeegetränks.

## Claims

1. Capsule (1) comprising a preferably rotationally symmetrically designed capsule body (2) having a side wall (3) and having a base (4), which is formed in one piece with the side wall, and having a cover (5), which covers the capsule body (2) and is intended for forming a closed chamber (6), which contains a substance (7) for preparing a beverage, wherein at least the base (4), in order for a liquid to be channelled through the chamber, can be penetrated, at a penetration region (9) of the base (4), by a device (18) arranged outside the capsule (1), wherein the base (4) has a reinforcing region (10), and wherein a central region of the preferably dome-shaped base (4) is designed as penetration region (9), **characterized in that** the reinforcing region (10) is arranged in particular in a rotationally symmetrical manner around the penetration region (9), wherein the reinforcing region (10) is designed as at least one segmental depression (8) essentially in the circumferential direction in the base (4).

2. Capsule (1) according to Claim 1, **characterized in that** the depression (8) has at least two wall segments which are inclined in relation to one another.

3. Capsule (1) according to Claim 1 or 2, **characterized in that** the depression (8) is designed in the form of a step and/or is of L-shaped design in a section plane running along the longitudinal axis (22) of the capsule body (2), wherein in particular one arm (23) of the L shape is located essentially parallel to the longitudinal axis of the capsule body (2) or encloses an angle (b) in the region of ± 20°, preferably of ± 10° and quite particularly preferably of ± 5°, with the longitudinal axis.

4. Capsule (1) according to one of Claims 1 to 3, **characterized in that** the depression (8) has at least one surface-area segment parallel to a section plane which runs through the depression (8) along the longitudinal axis (22) of the capsule body (2), or **in that** the surface-area segment encloses an angle (a) in the region of ± 45°, preferably of ± 30° and quite particularly preferably of ± 15°, with this section plane.

5. Capsule (1) according to one of Claims 1 to 4, **characterized in that** the base (4) has at least two, and preferably three to ten, depressions (8).

6. Capsule (1) according to Claim 5, **characterized in that** the base (4) is designed as an in particular triangular crosspiece (21) between the depressions (8).

7. Capsule (1) according to one of Claims 1 to 6, **characterized in that** the capsule wall (3) has at least one inner protrusion (11), preferably two and particularly preferably at least three, inner protrusions (11) as a stacking shoulder or shoulders, wherein in particular the capsule wall (3) has outer depressions (12) to complement the inner protrusions (11).

8. Capsule (1) according to Claim 7, **characterized in that** the inner protrusions (11) are spaced apart circumferentially from one another.

9. Capsule (1) according to one of Claims 1 to 8, **characterized in that** the capsule body (2) consists of plastics material, preferably of at least one biopolymer.

10. Capsule (1) according to one of Claims 1 to 9, **characterized in that** the capsule body (2) comprises at least two polymer layers and is produced, in particular, by means of thermoforming, wherein an outer layer of the capsule body (2) particularly preferably consists of polyethylene.

11. Capsule (1) according to one of Claims 1 to 10, **characterized in that** the cover (5) is formed from aluminium foil, a perforated sheet material or filter paper or any desired combinations thereof.

12. Capsule body (2) for a capsule (1) according to one of Claims 1 to 11.

13. Portion pack (14) comprising a capsule (1) according to one of Claims 1 to 11 which is filled with a substance (7), in particular with coffee, **characterized in that** the capsule (1) is enclosed in an essentially air-tight manner by a sheath (20).

14. System (15) comprising a capsule (1) according to one of Claims 1 to 11 which is filled with a substance (7), or comprising a portion pack (14) according to Claim 13, and also a beverage maker (16), wherein the beverage maker (16) has a capsule holder (17) for accommodating the capsule (1), and also has a device (18) for penetrating a base (4) of the capsule (1) and for feeding a liquid into the capsule (1) in order to extract the substance (7) for making a beverage, wherein the beverage can be discharged through a cover (5) of the capsule (1).

15. Use of a coffee-filled capsule (1) according to one of Claims 1 to 11, or of a portion pack (14) according to Claim 13, for making a coffee beverage.

## Revendications

1. Capsule (1) se composant d'un corps de capsule (2) présentant de préférence la symétrie de révolution, avec une paroi latérale (3) et avec un fond (4) formé d'une seule pièce avec celle-ci, ainsi qu'avec un couvercle (5) recouvrant le corps de capsule (2) pour la formation d'une chambre fermée (6), qui contient une substance (7) destinée à la préparation d'une boisson, dans laquelle au moins le fond (4) peut être percé en une zone de perçage (9) du fond (4) avec un dispositif (18) disposé à l'extérieur de la capsule (1) pour le passage d'un liquide à travers la chambre, dans laquelle le fond (4) présente une zone de renforcement (10) et dans laquelle une zone centrale du fond (4) réalisé de préférence en forme de dôme est réalisée comme zone de perçage (9), **caractérisée en ce que** la zone de renforcement (10) est disposée, en particulier avec la symétrie de révolution, autour de la zone de perçage (9), dans laquelle la zone de renforcement (10) est réalisée sous la forme d'au moins un creux partiel (8) essentiellement en direction périphérique dans le fond (4).

2. Capsule (1) selon la revendication 1, **caractérisée en ce que** le creux (8) présente au moins deux parties de paroi inclinées l'une vers l'autre.

3. Capsule (1) selon la revendication 1 ou 2, **caractérisée en ce que** le creux (8) est réalisé par degrés et/ou est réalisé en forme de L dans un plan de coupe s'étendant le long de l'axe longitudinal (22) du corps de capsule (2), dans laquelle en particulier un bras (23) de la forme en L est essentiellement parallèle à l'axe longitudinal du corps de capsule (2) ou forme avec l'axe longitudinal un angle (b) dans la plage de ± 20°, de préférence de ± 10°, et de préférence encore de ± 5°.

4. Capsule (1) selon l'une quelconque des revendications 1 à 3, **caractérisée en ce que** le creux (8) présente au moins une partie de surface parallèle à un plan de coupe à travers le creux (8) s'étendant le long de l'axe longitudinal (22) du corps de capsule (2) ou **en ce que** la partie de surface forme avec ce plan de coupe un angle (a) dans la plage de ± 45°, de préférence de ± 30°, et de préférence encore de ± 15°.

5. Capsule (1) selon l'une quelconque des revendications 1 à 4, **caractérisée en ce que** le fond (4) présente au moins deux et de préférence trois à dix creux (8).

6. Capsule (1) selon la revendication 5, **caractérisée en ce que** le fond (4) est réalisé sous la forme d'une facette en particulier triangulaire (21) entre les creux (8).

7. Capsule (1) selon l'une quelconque des revendications 1 à 6, **caractérisée en ce que** la paroi de capsule (3) présente au moins une saillie intérieure (11), de préférence deux et de préférence encore au moins trois saillies intérieures (11) comme épaulements d'empilement, dans laquelle en particulier la paroi de capsule (3) présente des creux extérieurs (12) complémentaires aux saillies intérieures (11).

8. Capsule (1) selon la revendication 7, **caractérisée en ce que** les saillies intérieures (11) sont espacées l'une de l'autre sur la périphérie.

9. Capsule (1) selon l'une quelconque des revendications 1 à 8, **caractérisée en ce que** le corps de capsule (2) se compose de matière synthétique, de préférence d'au moins un biopolymère.

10. Capsule (1) selon l'une quelconque des revendications 1 à 9, **caractérisée en ce que** le corps de capsule (2) se compose au moins de deux couches de polymère et est fabriqué en particulier par un procédé d'emboutissage profond, dans laquelle de façon particulièrement préférée une couche extérieure du corps de capsule (2) se compose de polyéthylène.

11. Capsule (1) selon l'une quelconque des revendications 1 à 10, **caractérisée en ce que** le couvercle (5) est formé par une pellicule d'aluminium, une pellicule perforée ou un papier filtre ou par une combinaison quelconque de ceux-ci.

12. Corps de capsule (2) pour une capsule (1) selon l'une quelconque des revendications 1 à 11.

13. Emballage de dose (14) comprenant une capsule (1) selon l'une quelconque des revendications 1 à 11 remplie avec une substance (7), en particulier avec du café, **caractérisé en ce que** la capsule (1) est entourée par une enveloppe (20) essentiellement étanche à l'air.

14. Système (15) comprenant une capsule (1) selon l'une quelconque des revendications 1 à 11, remplie avec une substance (7), ou emballage de dose (14) selon la revendication 13 et dispositif de préparation de boisson (16), dans lequel le dispositif de préparation de boisson (16) présente un porte-capsule (17) destiné à recevoir la capsule (1), ainsi qu'un dispositif (18) destiné à percer un fond (4) de la capsule (1) et à introduire un liquide dans la capsule (1) en vue de l'extraction de la substance (7) pour la préparation d'une boisson, dans lequel la boisson peut s'écouler à travers un couvercle (5) de la capsule (1).

15. Utilisation d'une capsule (1) selon l'une quelconque des revendications 1 à 11 remplie de café ou d'un emballage de dose (14) selon la revendication 13 pour la préparation d'une boisson au café.
